(19) Europäisches Patentamt European Patent Office Office européen des brevets

(11) **EP 3 547 622 A1**

(12) **EUROPEAN PATENT APPLICATION**

(43) Date of publication:
**02.10.2019 Bulletin 2019/40**

(21) Application number: **18305362.8**

(22) Date of filing: **29.03.2018**

(51) Int Cl.:
***H04L 12/707*** (2013.01)   ***H04L 12/703*** (2013.01)
***H04W 84/18*** (2009.01)   ***H04L 12/753*** (2013.01)
***H04L 12/801*** (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **KHANFOUCI, Mourad**
**35708 Rennes Cedex 7 (FR)**
• **BRUNEL, Loïc**
**35708 Rennes Cedex 7 (FR)**

(74) Representative: **Cabinet Plasseraud**
**66, rue de la Chaussée d'Antin**
**75440 Paris Cedex 09 (FR)**

(54) **METHOD FOR NETWORK MANAGEMENT AND APPARATUS FOR IMPLEMENTING THE SAME**

(57)     A method for managing a computer network is proposed, which comprises obtaining a metric value for each node of a plurality of nodes of the computer network using a data structure for the node, based on a data traffic intensity value for the node, wherein the data structure represents nodes of the computer network and edges respectively corresponding to neighboring relations between two nodes of the computer network, and selecting, among the nodes of the computer network, at least one node to be protected against node and/or edge failure based on the determined metric values.

FIG. 10

**Description**

The present disclosure relates to the field of management of computer networks, in particular IoT networks such as sensor networks.

Low-Power and Lossy Networks (LLNs) are networks of interconnected low-power nodes with interconnects that are subject to high loss rates, low data rates, and instability. Examples of LLN networks include wireless sensor networks, typically with a large number (thousands) of sensor nodes, and so-called "Internet of Things" (IoT) networks or systems, a class of networks where embedded devices that are capable of wireless communications are interconnected.

The Internet Engineering Task Force (IETF) has developed a routing protocol adapted for LLN networks known as the RPL protocol. RPL is specified in the Request for Comments (RFC) 6550, entitled "RPL: IPv6 Routing Protocol for Low-Power and Lossy Networks," dated March 2012.

RPL routes are optimized for traffic to or from one or more roots that act as network sinks for the network topology. As a result, RPL organizes a topology as a so-called Directed Acyclic Graph (DAG) that is partitioned into one or more Destination Oriented DAGs (DODAGs), with one DODAG per network sink, and uses the DODAG as routing tree.

RPL provides a mechanism for automated setup of the routing tree as well as local repairs to the routing tree in case of failure of a network node or of an interconnect between two network nodes. RPL repair is a process that identifies failures in the network such as node/edge failures and applies the following local counter measures: route from the node to a new parent node different from the current parent node in the RPL DODAG tree, and if there is no candidate parent node with lower RPL rank, route the packets to a node with the same RPL rank.

The RPL local repair strategies need to find candidates for the rerouting around the failing node/edge. The state-of-the-art RPL repair for finding the RPL repair candidates is based on cycle-based protection. The concept of cycle-based protection is to search around the failing node for cycles that can relay the packets intended for the node to a root with low latency. This search may be performed through a so-called depth first graph (DFS) algorithm, as described for example in the paper of Boukerche and Tropper entitled "A distributed graph algorithm for the detection of local cycles and knots", IEEE Transactions on Parallel and Distributed Systems, 9(8), 748-757, 1998. However DFS is considered complex and slow, and when used for RPL local repair has the drawbacks of reducing the flexibility of the RPL repair mechanism and introducing inacceptable restoration latency.

There is therefore a need for providing an improved network management scheme and network node implementing the same that address the above-described drawbacks and shortcomings of the conventional technology in the art.

It is an object of the present subject disclosure to provide an improved network management scheme and apparatus implementing the same.

Another object of the present subject disclosure is to provide an improved network management scheme and apparatus implementing the same for alleviating the above-described drawbacks and shortcomings of conventional failing node/edge repair schemes, in particular in a LLN network.

To achieve these objects and other advantages and in accordance with the purpose of the present subject disclosure, as embodied and broadly described herein, in one aspect of the present subject disclosure, a method for managing a computer network is proposed. The method comprises: obtaining a metric value for each node of a plurality of nodes of the computer network using a data structure for the node, based on a data traffic intensity value for the node, wherein the data structure represents nodes of the computer network and edges respectively corresponding to neighboring relations between two nodes of the computer network; and selecting, among the nodes of the computer network, at least one node to be protected against node and/or edge failure based on the determined metric values.

The proposed method advantageously identifies certain nodes of the computer network as nodes to be protected, so as to apply a local repair scheme, preventively or as corrective maintenance in the event of a node/edge failure, to determine a repair cycle around these nodes. The nodes to be protected, also referred to as "hubs" in the following, are advantageously selected based on a metric that uses a data traffic intensity value for the node. The proposed scheme therefore avoids applying local repair to all the nodes of the network by using a flexible selection mechanism which can be adapted to various network topologies and deployment scenarios, and as a consequence limits computations associated with local repair schemes applied in the computer network to a limited number of nodes, which decreases the computation time associated with local repair.

The proposed scheme is therefore well suited for, even though not limited to, highly dense networks, for example LLN networks, such as wireless sensor networks, with thousands of sensor nodes, where each node may have limited computation power, by providing a faster scheme for identifying backup structures that minimizes the total packet loss in a computer network.

In some embodiments, the metric value is determined based on a network topology of the computer network around the node and the data traffic intensity value for the node. In such cases the proposed scheme advantageously uses a metric that accounts for data traffic intensity for a node as well as network topology around the node.

In one or more embodiments, the data structure comprises a routing tree according to which data are transmitted from the nodes to a root node of the computer network, and the proposed method further comprises: determining in the network an initial protection path surrounding the at least one node to be protected, the determining the initial protection path comprising: identify in the data structure a first node neighbor of the at least one node to be protected such that the at least one node to be protected belongs to a predecessor set of the first node neighbor, wherein a predecessor set of a given node comprises all nodes located between the given node and the root node in the routing tree; identify in the data structure a second node neighbor of the at least one node to be protected such that an intersection between the predecessor set of the first node neighbor and a predecessor set of the second node neighbor is maximized; determining the initial protection path based on an initial protection path node triplet comprising the first node neighbor, the second node neighbor, and a first last node, wherein the first last node is a first node of an initial protection intersection path oriented towards the root node, the initial protection intersection path corresponding to the intersection between the predecessor set of the first node neighbor and the predecessor set of the second node neighbor.

The proposed method therefore advantageously provides a local repair mechanism for nodes that have been identified as nodes to be protected, which mechanism comprises a determination of a local repair cycle around such nodes.

The proposed local repair scheme may further comprise, in one or more embodiments, the determination in the network of a secondary protection path surrounding the at least one node to be protected, based on the initial protection path, so as to advantageously increase the network resiliency against node/edge failure in the initial protection path, wherein the determining the secondary protection path comprises: determining at least one initial protection path node that belongs to the initial protection path; identify in the data structure a third node neighbor of the at least one initial protection path node; determining the secondary protection path based on a secondary protection path node triplet comprising the at least one initial protection path node, the third node neighbor, and a second last node, wherein the second last node is a first node of a secondary protection intersection path oriented towards the root node, the secondary protection intersection path corresponding to the intersection between the predecessor set of the third node neighbor and the predecessor set of the at least one initial protection path node neighbor.

In one or more embodiments, the obtaining the metric value for the node further comprises executing iterations of a loop, wherein an iteration comprises: determining at least one data traffic intensity value during a predetermined period at the node; receiving at least one neighbor index variable value for a node neighbor of the node in the data structure; calculating an index variable value for the node based on the at least one data traffic intensity value, and the at least one neighbor index variable value for the node neighbor of the node in the data structure; calculating the metric value for the node based on the index variable value. In some embodiments, the metric value for the node is calculated based on a difference between the first and second index variable values.

This proposed metric value for a node of the network may be seen as a metric that measures a "prestige" or "importance" of the node in the network, based on the intensity of data traffic for the node as well as at least some of the node's neighbors in the data structure. This prestige metric may advantageously be used for the proposed scheme, so as to select nodes to be protected, and to limit the local repair computations to those selected nodes, based on their level of prestige in the network. In addition, the proposed prestige metric determination scheme may advantageously be used with a data structure that comprises a network graph and/or a routing tree.

In some embodiments, the selecting the at least one node to be protected against node and/or edge failure further comprises: determining a maximum prestige value in the computer network, based on the determined metric values; selecting the at least one node based on a comparison of a distance between its determined metric value and the maximum prestige value, with a second predefined threshold.

In some embodiments, the determining at least one data traffic intensity value during a predetermined period at the node comprises: determining respective data traffic intensity values based on a number of data packets received from at least one of the neighbor nodes of the node. In some embodiments the respective data traffic intensity values may be determined based on numbers of data packets respectively received from each of the neighbor nodes of the node.

In one or more embodiments, where the data structure comprises a routing tree and a network graph, the method further comprises: determining whether to use the routing tree or the network graph for the determination of the metric value for the node based upon a comparison of a number of failing nodes and/or edges in the routing tree with a first predefined threshold.

In one or more embodiments where the data structure comprises a routing tree according to which data from the nodes are collected by a root node, the determining the metric value for the node comprises: determining, for nodes in a subtree of the routing tree, traffic intensity values respectively representing intensities of their data traffic towards the node; identifying at least one path in the subtree as an active path, based on the traffic intensity value of at least one node of the at least one path; determining a subtree maximum length among respective lengths of active paths in the subtree; and calculating the metric value for the node based on the subtree maximum length.

Therefore a different metric may advantageously be used with the proposed scheme, that combines the use of data traffic intensity values with the topology of the computer network as reflected by a routing tree generated for the computer network.

The proposed method may advantageously be combined or used with the RPL scheme, in cases where the data structure comprises a RPL routing data structure, where the routing tree is a RPL routing tree, and the network graph is a destination oriented directed and acyclic graph (DODAG).

In another aspect of the present subject disclosure, an apparatus is proposed, which comprises a processor, a memory operatively coupled to the processor, and network interfaces to communicate in a computer network, wherein the apparatus is configured to perform a method for network management as proposed in the present subject disclosure.

In yet another aspect of the present subject disclosure, a non-transitory computer-readable medium encoded with executable instructions which, when executed, causes an apparatus comprising a processor operatively coupled with a memory, to perform a method for network management as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method for network management as proposed in the present subject disclosure, is proposed. In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figures 1a and 1b respectively show an example of DODAG routing structure and an exemplary corresponding routing tree, to which the proposed method may be applied in accordance with one or more embodiments;
Figure 2 is a block diagram illustrating an exemplary determination of nodes to be protected according to one or more embodiments;
Figure 3 is a block diagram illustrating an exemplary calculation of a prestige metric value, in accordance with one or more embodiments;
Figure 4 is a block diagram illustrating an exemplary calculation of a long-term maximum subtree metric;
Figures 5(a), (b), and (c) respectively show plots of the prestige-based ranking (Fig. 5(c)), the long-term maximum subtree metric ranking (Fig. 5(a)), and the short-term maximum subtree ranking (Fig. 5(b));
Figure 6, shows a histogram of values of the prestige metric, the short-term maximum subtree metric, and long-term maximum subtree metric;
Figure 7 shows prestige metric values calculated from a network graph for an exemplary random deployment of 180 nodes in 100x100 meters, according to one or more embodiments;
Figure 8 is a block diagram illustrating an exemplary prestige management procedure, in accordance with one or more embodiments;
Figures 9(a) and 9(b) illustrate an exemplary scheme for cycle determination around a given node according to one or more embodiments;
Fig. 10 illustrates an exemplary network node according to one or more embodiments.

## Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be indifferently used to indicate that two or more elements are in direct physical or electrical contact with each other, or two or more elements are not in direct contact with each other, but yet still co-operate or interact with each other.

As used herein, the term "packet" may include frames, data blocks, protocol data units or any unit of data that may be routed or transmitted between nodes or stations or across a network. A packet may include a group of bits, which may include one or more address fields, control fields and data, for example. A data block may be any unit of data or information bits.

For the purposes of the present disclosure, the term "server" is used herein to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and applications software which support the services provided by the server. Servers may vary widely in configuration or capabilities, but generally a server may include one or more central processing units and memory. A server may also include one or more mass storage devices, one or more power supplies, one or more wired or wireless network interfaces, one or more input/output interfaces, or one or more operating systems, such as Windows Server, Mac OS X, Unix, Linux, FreeBSD, or the like.

For the purposes of this disclosure a "computer network" should be understood to refer to a network that may couple devices (also referred to herein as "nodes") so that data communications may occur between devices, including between wireless devices coupled via a wireless network, for example. A network may also include mass storage, such as network attached storage (NAS), a storage area network (SAN), or other forms of computer or machine readable media, for example, and may include or be connected to a server. A network may include the Internet, one or more local area networks (LANs), one or more wide area networks (WANs), wire-line type connections, wireless type connections, cellular, such as carrier telephone lines, optical fibers, synchronous optical networks, synchronous digital hierarchy links, powerline communication links (e.g. IEEE 61334, IEEE P1901.2), Ethernet, Bluetooth, Bluetooth Low Energy (BLE) or Bluetooth Smart, WiFi or any connection based on a IEEE802.11x protocols, ZigBee or any connection based on the IEEE802.15.4 protocol, Z-Wave, 6LowPAN (IPv6 Low-power wireless Personal Area Network), Thread, Sigfox, Neul, LoRa, any NFC connection, 2G (including GSM/GPRS/EDGE)/3G (including UMTS/HSPA)/4G (including LTE and LTE-Advanced)/5G cellular, or any combination thereof. Various types of devices, for example gateways, may be made available to provide an interoperable capability for differing architectures or protocols used in the network. Any number of nodes, devices, apparatuses, links, interconnections, etc. may be used in a computer network according to the present subject disclosure.

A communication link or channel may include, for example, analog telephone lines, full or fractional digital lines, wireless links including satellite links, or other communication links or channels, such as may be known to those skilled in the art.

A computing device of a network, for example a sensor node, may be capable of sending or receiving signals, such as via a wired or wireless network, and/or may be capable of processing and/or storing data.

A computer network may be described as a graph $G = (V, E)$, where the set $V$ of vertices of the graph $G$ represents network nodes of the computer network, and the set $E$ of edges of the graph $G$ represents communication links between network nodes of the computer network. In an "undirected graph" $G$, pairs of vertices $(v_1, v_2)$ are unordered, whereas each pairs of vertices $(v_1, v_2)$ are ordered in a "directed graph" (also referred to as a "direction-oriented graph", or "DOG"), for example so that $v_1$ is the source and $v_2$ is the target.

In the present subject disclosure, a "path" $p(v_1, v_2)$ from a vertex $v_1$ to a vertex $v_2$ of the graph $G$ may be used to indicate an alternating sequence of vertices and edges, beginning with vertex $v_1$ and ending with vertex $v_2$. A path $p(v, v)$ leading from one vertex $v$ to itself may be called a "closed path". The term "cycle" may be used herein to indicate a closed path $p(v,v)$, where all the edges are distinct, and the only vertex to occur twice in $p(v, v)$ is $v$, which occurs exactly twice.

As used herein, the term "tree" refers to a directed graph wherein one vertex (called the "root" or "coordinator") is such that all vertices of the graph, except for the root, are the head of exactly one edge. As is the case for RPL, a tree data structure may be used, in relation to a computer network, as a routing data structure where data transmitted by network nodes are routed towards the root of the tree. For two nodes (vertices) $v$ and $w$ of a tree for which there exists a path from $v$ to $w$, $v$ will be referred to herein as an "ancestor" of $w$, and w may be referred to herein as a "descendant" of $v$. For two nodes (vertices) $v$ and w of a tree for which $(v,w)$ is an edge, $v$ will be referred to herein as the "father" of $w$, and w may be referred to herein as the "son" or "child" of $v$.

The term "neighbor" of a vertex $v_1$ of a graph, or a node $w_1$ of a tree, may be used to indicate another vertex $v_2$, or node $w_2$, that is adjacent to the vertex $v_1$ on the graph, or to the node $w_1$ on the tree, that is, there is one or several edges interconnecting vertices in the graph (or nodes in the tree), between the two vertices $v_1$ and $v_2$ in the graph, or between the two nodes $w_1$ and $w_2$ in the tree. The terms "path neighbor" or "indirect neighbor" may interchangeably be used to indicate two vertices or nodes that are interconnected by a path in the network graph or the tree. The terms "direct neighbor" or "immediate neighbor" may interchangeably be used to indicate two vertices or nodes that are interconnected by only one edge in the network graph or the tree. Said otherwise, for each vertex $v_2 \in V$ that is a direct neighbor of $v_1 \in V$ in a graph $G = (V,E)$, $(v_1, v_2) \in E$. For a corresponding tree structure $T = (V, E_T)$ where $E_T \in E$, for each node $w_2 \in V$ that is a direct neighbor of $w_1 \in V$, $(w_1, w_2) \in E_T$.

It should be understood that embodiments of the present subject disclosure may be used in a variety of applications, in particular, although not limited to, sensor networks in which a potentially large number of sensors cooperatively monitor physical or environmental conditions at different locations (e.g. in a factory or a nuclear plant facility), for example temperature, pressure, energy/power resources and/or consumption, radiations, polluants, etc. Although the present subject disclosure is not limited in this respect, the methods for network management disclosed herein may be used in many types of computer network with various topologies, such as, for example, any LLN network, any Internet of Things (IoT) network or system, any Machine-to-Machine (M2M) network or system, e.g. smart object networks, such as sensor networks, or any combination thereof. and may be used in many apparatuses such as in any network node of a computer network, such as, for example, a root node, a gateway node, or in any server connected to or comprised in the computer network.

RPL is a proactive IPv6 distance vector protocol that was developed for mesh routing in LLN networks such as wireless sensor networks. RPL uses a destination oriented directed and acyclic graph (DODAG) structure that connects the nodes of the wireless sensor network to a network coordinator node (which is also sometimes called "root" or "root node" of the DODAG), and describes a scheme to build such a DODAG structure. Network nodes in a wireless sensor network in which RPL may be used can be full function devices (FFD), in which case they transmit their sensor readings and relay the readings of their neighboring nodes, or reduced function devices (RFDs), in which case they transmit their readings without relaying the data of neighboring nodes. The coordinator collects the data from the nodes of the wireless sensor network and transmits it to a gateway to a packet data network, e.g. an IoT gateway to an IP network, e.g. the Internet network.

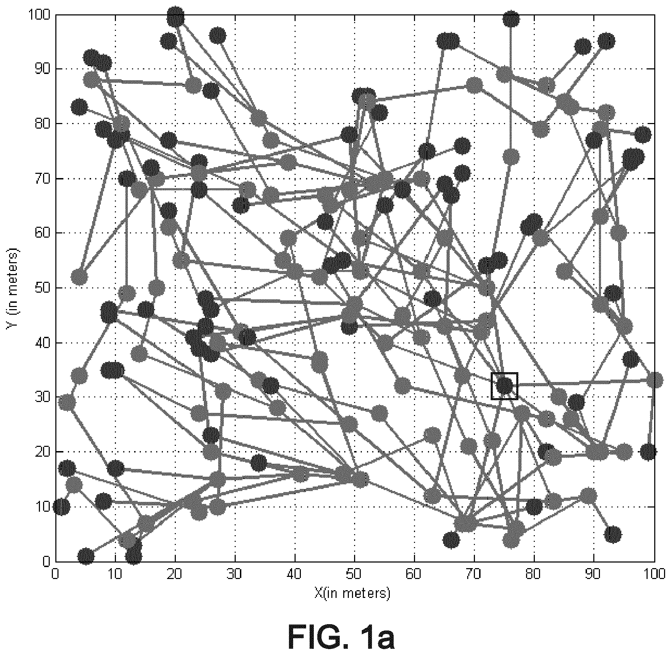

Fig. 1a shows an example of DODAG routing structure where the "leaf" sensors, which are RFD nodes, are shown as disks in dark grey, and are sensor nodes which transmit their sensor readings without relaying data from other sensors. The FFDs, which are nodes that are capable of transmitting their own readings and relaying readings from neighboring sensors, are shown on Fig. 1a as disks in light grey. The coordinator node is shown on Fig. 1a as surrounded by a square.

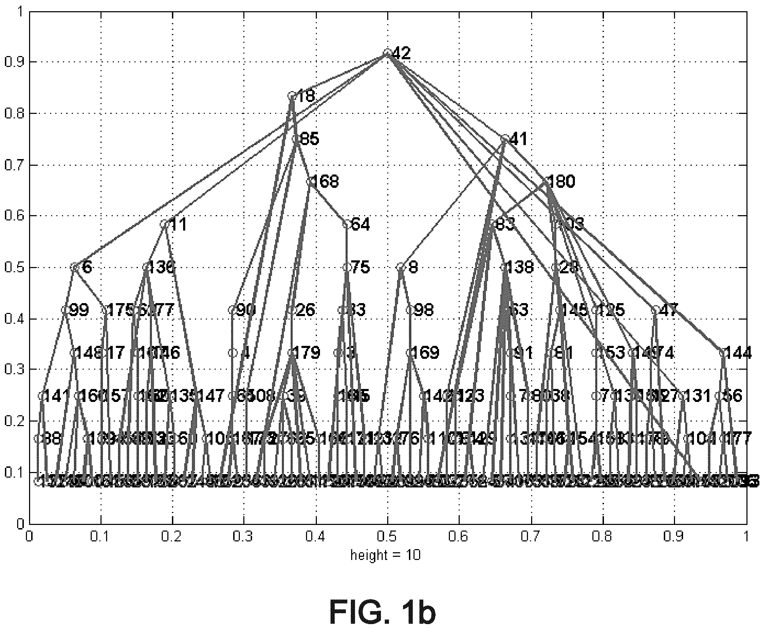

Fig. 1b shows an exemplary routing tree generated for a network that corresponds to the DODAG graph of Fig. 1a.

For purposes of building a DODAG graph, the RPL coordinator may be configured to periodically transmit data packets, referred to as DODAG information object (DIO) packets, to its direct neighbors, that is, its immediate neighbors, that in turn propagate received DIO packets to the rest of the network via their own neighbors. DIO packets contain information concerning the DODAG, including an RPL rank of the sender, an RPL version number, an objective function (OF) to be minimized by the RPL routing, etc.

The RPL rank indicates a gradient of diffusion of the packets in the network, that is, high rank values indicate nodes located at a high number of hops from the coordinator, e.g., leaf nodes, and low rank values indicate nodes located at a low number of hops from the coordinator, e.g., FFD nodes that are relaying the data of the leaf nodes. The diffusion of the packets in the network is from higher to lower rank values.

The RPL rank of the coordinator, which is the root of the DODAG, is set to a zero value. The RPL rank of a child node in the RPL routing tree is incrementing the RPL rank of the parent node and each child is transmitting its packets to its parent.

During the DODAG construction, each node obtains its rank in the DODAG as follows: Each node listens to DIO messages to learn the set of nodes in the one-hop neighborhood. Upon receipt of its first DIO message, each node joins the DODAG, computes its own rank based on received information, and starts transmitting its own DIO messages (that include its computed rank).

The RPL rank calculation process may be viewed as dynamic, as each node dynamically maintains a set of parents from which DIO messages are received. In addition, a preferred parent is dynamically selected by each node in order to transmit the packets of the children in the RPL routing tree, based on the following criterion: the link with the preferred parent minimizes the routing objective function.

The main advantage of RPL with respect to standard routing algorithms for wireless sensor networks is the use of trickle algorithm, described in the RFC 6206, entitled "The trickle algorithm," published by the IETF in March 2011, to save energy and increase the networks life time. As described in the RFC 6206, the principle of the trickle is to locally adapt by the network nodes the periodicity of the route maintenance to the topology change.

In the following, we consider the non-limiting example of a dense wireless sensor network deployment where a set of $N$ sensor nodes (each identified in the network by an identifier, or ID) are deployed in a region $R$.

The sensor nodes are configured to transmit beacon packets, typically periodically, in their respective wireless coverage areas in order to cooperatively learn a topology of the network. For example, if a beacon of a node $i$ is received with good quality by a neighboring node $j$, a neighbor relation can be defined in the between the node $i$ and the *node j* in the wireless sensor network topology. Upon their discovery, the various neighbor relations between nodes can be grouped into a data structure organized as a graph and/or a tree representing the network.

In the non-limiting example of a dense wireless sensor network, the network graph may be a graph $G\,(V,\,E)$ that includes a set of network nodes $V$ that represent the sensors of the network and a set of edges that are linking or interconnecting the different nodes that represent the relations between the sensors.

RPL describes a scheme for building a centrality-based routing tree $T(V,E')$ that links the nodes $V$ by edges such that two nodes with respective ranks are linked by an edge if the node with a lower rank is a preferred parent for the node with a higher rank. The routing tree is designed so that data are collected from the sensor nodes of the network towards the network coordinator, which operates as a root node of the tree. The RPL routing tree may advantageously be used to perform the proposed method for network management in one or more embodiments.

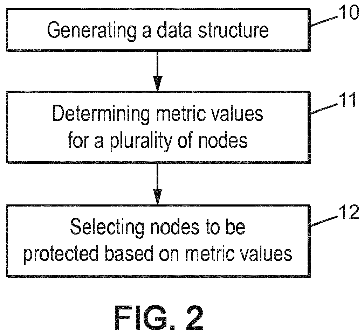

With reference to Figure 2, the determination of nodes to be protected according to one or more embodiments is described below. The nodes to be protected are referred to as "hubs" in the following.

The proposed determination of nodes to be protected advantageously allows minimizing the total packet loss in the network, including through selection of hubs based on their respective contributions to the active paths in the network, activity of a network path being considered from a standpoint of data traffic intensity on the path: the more data traffic intensity on the path, the more active the path will be considered. In one or more embodiments, the selected hubs are the nodes that contribute the most to the active paths in the network, i.e. the nodes that relay the most of the traffic in the network during a predetermined time frame (e.g. data traffic per second). Should these nodes not be protected, the failing of one of them or any incoming edge thereto would result in an important loss of data packets that are coming from the sensors of the network.

In one or more embodiments, a data structure representing the nodes of the network and respective neighboring relations between two nodes of the network is generated (10). The data structure may for instance include a network graph or a routing tree (e.g. an RPL routing tree, that is, a routing tree built according to the RPL RFC), or a combination thereof.

The generated data structure may be used for obtaining (11) a metric value (which may also be called an "index" in the following) for each node of a set of nodes of the network that comprises a plurality of nodes, using the data structure for the node, according to an amount of data traffic flowing through the node. Said otherwise, different metrics may be used, individually or in combination with each other, to calculate a value (also interchangeably called rank, index or score) associated with a node of the network, a metric value being determined for each node of a plurality of nodes of the network.

In one or more embodiments, the metric value for a node may preferably be determined at the node itself, in which cases the metric values determined by nodes of the network may be transmitted to a central node, a root node in the rooting tree of the network, or a gateway or a server, all of which may be configured to perform the proposed method for managing a computer network.

The determined metric values may be used for the selection (12) of at least one node to be protected against failure of the node itself and/or failure of an interconnect of the node with another node of the network.

A first example of metric that may be used in one or more embodiments, referred to in the following as the "prestige metric", will now be described.

In some embodiments, the determination of the hubs of the network may be based on a determination, for each node of a set of nodes of the network among which nodes to be protected are to be selected, of a rank, a level, a value that characterizes the importance or prestige of the node, relative to the other nodes for which a prestige value is determined, with respect to the intensity of data traffic in which the node is involved. For example, in one or more embodiments the metric used to calculate respective prestige values may be reflect an amount of data traffic flowing through the node , possibly from a region of neighbors of the node.

In some embodiments where a data structure that represents the network has been generated, which data structure comprises a routing tree and/or a graph as a model of the network, the importance value or prestige value of a node may be determined using a calculation of the centrality of the node in an active subtree of the routing tree or an active subgraph of the network graph, wherein the activity is a criterion measuring data traffic activity. If the node is not contributing to the active subtree, its importance value is 0, otherwise its centrality may be given by a prestige index of the node which may be determined in the routing tree and/or in the network graph.

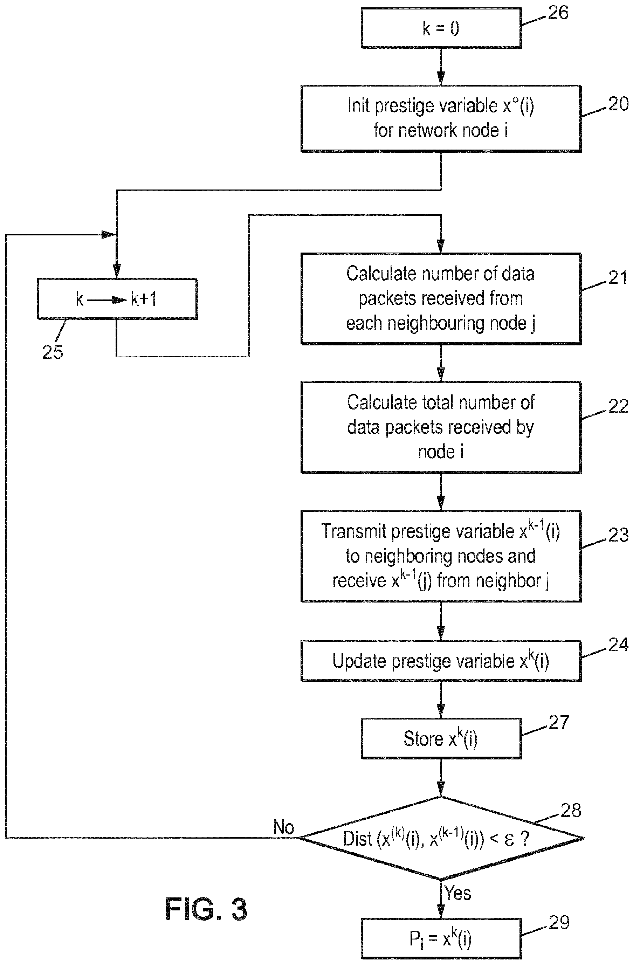

In one or more embodiments, traffic intensity data may be used in the calculation of the prestige metric value, for example as described in one of the following non-limiting schemes illustrated by Fig. 3:

A prestige variable $x(i)$ for a node $i$ of the wireless sensor network may be calculated using a calculation loop, an iteration k of the calculation loop being executed to calculate a prestige variable value $x^k(i)$ upon incrementing (25) a counter value ($k$), which may be incremented periodically or substantially periodically based on a predetermined time period (e.g. of duration of around one second). At the first loop iteration ($k = 0$) (26), the prestige variable value $x^0(i)$ may be initialized (20), for example to a predetermined value, or to a random value.

Each loop iteration, other than the loop initialization iteration ($k \geq 1$), may include the following, for a network node of index i:

For each neighboring *node j* in a set $N(i)$ of nodes neighbors of node $i$, a number $A_{j,i}$ of data packets received by the node $i$ from its neighboring *node j* in the data structure (that may include a routing tree, e.g. a RPL routing tree) is calculated (21), for instance by the node $i$ itself which can count the number of packets it receives from its neighbor node j during a predetermined time duration that corresponds to the loop iteration being executed. This predetermined time duration may for example correspond to at least one topology update period, i.e. a period of around 1 second. In some embodiments, the neighbors of node $i$ used to determine the prestige variable value may be limited to one or more of the direct neighbors of the node $i$.

The number of received packets from each neighbor node can then be used to calculate (22) a total number of received packets at the node $i$ from its neighbors, for example as the sum of the numbers $A_{j,i}$ for all neighbors $j$: $A = \sum_{j \in N(i)} A_{j,i}$.

The calculation of the respective prestige values may be cooperative, in that each node i of the network may transmit (23) its prestige variable for the previous iteration ($x^{k-1}(i)$ for the node $i$) to one or several of its neighbouring nodes ($j$). As the neighboring nodes $j$ in the set N(i) of nodes neighbors of node $i$ may also transmit to the node $i$ their prestige variable for the previous operation ($x^{k-1}(j)$ for the neighbor j), the node $i$ may receive (23) from its neighbors ($j$) respective prestige variables for the previous iteration of the loop.

The prestige variable value $x^k(i)$ may then be obtained as an update (24) using the number of received packets from each neighbor node weighted by the prestige variable values of the previous iteration $x^{k-1}(i)$ received from the corresponding neighbor node. This advantageously provides a cooperative calculation scheme for prestige values wherein the prestige of a node reflects the data traffic at the node originated from its neighbors while accounting for the respective prestige values for these neighbors.

In one or more embodiments, the prestige variable for node i at iteration k $x^{(k)}(i)$ may be calculated as follows:

$$x^k(i) = 1 + \sum_{j \in N(i)} A_{j,i} x^{k-1}(j)$$

where $x^{(k-1)}(j)$ is the value of the prestige variable at the iteration ($k$ - 1) for the neighbor *node j,* and $N(i)$ is a set of neighbors of the node *i* in the data structure (which, depending on the embodiment, may comprise a routing tree, e.g. an RPL routing tree, and/or a graph).

In some embodiments, a normalized traffic intensity value for the node *i*, for example obtained as $\tilde{A}_{j,i} = A_{j,i}/A$, may be used in the the update of the prestige variable for node i at iteration k($x^{(k)}(i)$) instead of the traffic intensity value $A_{j,i}$:

$$x^k(i) = 1 + \sum_{j \in N(i)} \tilde{A}_{j,i} x^{k-1}(j)$$

In such cases the parameter $\tilde{A}_{j,i} = A_{j,i}/A$ is the normalized traffic intensity for the node i.
In other embodiments, a discount parameter $\alpha$, for example with a value between 0 and 1, may be introduced in one of the above calculations to account for a depth of the data structure, i.e. the routing tree or the graph, that influences the prestige variable of the node *i.*
The prestige variable for node *i* at iteration k $x^{(k)}(i)$ may then be calculated as:

$$x^k(i) = 1 + \sum_{j \in N(i)} \alpha A_{j,i} x^{k-1}(j)$$

or

$$x^k(i) = 1 + \sum_{j \in N(i)} \alpha \tilde{A}_{j,i} x^{k-1}(j)$$

where $x^{(k-1)}(j)$ is the value of the prestige variable at the iteration ($k$ - 1) for the neighbor node j, $N(i)$ is a set of neighbors of the node *i* in the data structure (which, depending on the embodiment, may comprise a routing tree, e.g. an RPL routing tree, and/or a graph), and $\alpha$ is a discount parameter that determines the depth of the data structure that influences the prestige variable of the node *i.* The parameter $\alpha$ may be defined as $0 \leq \alpha \leq 1$, with a predetermined value for each node *i* for which a prestige value is calculated using the above-described scheme, or depending on the embodiment with an individual value $\alpha(i)$ determined for each of these nodes:

$$x^k(i) = 1 + \alpha(i) \sum_{j \in N(i)} A_{j,i} x^{k-1}(j)$$

or

$$x^k(i) = 1 + \alpha(i) \sum_{j \in N(i)} \tilde{A}_{j,i} x^{k-1}(j)$$

In one or more embodiments, the parameter $\alpha$ may be defined as $0 \leq \alpha(j) \leq 1$, that is, may be different for each *node j* that is a neighbor of the node *i* for which a prestige value is calculated using the above-described scheme:

$$x^k(i) = 1 + \sum_{j \in N(i)} \alpha(j) A_{j,i} x^{k-1}(j)$$

or

$$x^k(i) = 1 + \sum_{j \in N(i)} \alpha(j) \tilde{A}_{j,i} x^{k-1}(j)$$

The parameter $\tilde{A}_{j,i} = A_{j,i}/A$ may be viewed as a normalized traffic intensity for the node $i$.

In one or more embodiments, the calculated prestige variable value $x^k(i)$ may be stored (27) in memory, and then compared with the value $x^{k-1}(i)$ obtained from the preceding iteration in order to determine whether the loop is to be stopped or if an additional iteration is to be performed.

In one or more embodiments, the comparison between the two prestige variable values corresponding to two successive iterations may include calculating a distance between the two values, and comparing (68) the distance with a predetermined threshold $\varepsilon$. In some embodiments, the loop may be considered completed upon determining that the distance value is below the threshold $\varepsilon$, and it may be considered that another loop iteration is to be performed upon determining that, to the contrary, the distance value is above the threshold $\varepsilon$.

For example, the learning of the prestige variable may be stopped in one or more embodiments upon determining that the following condition is realized:

$$\left| x^{(k)}(i) - x^{(k-1)}(i) \right| < \varepsilon$$

where $\varepsilon$ is a precision parameter for the prestige variable, and the function $|x|$ is the absolute value function.

In one or more embodiments, the loop stopping criterion may only be activated when the loop iteration index $k$ is larger than a predetermined threshold.

Upon determining that the loop may be stopped, the prestige variable for the last iteration $x^k(i)$ may be stored (29) in memory as the current prestige value $P_i$ for the node $i$.

The proposed prestige value for a node of a computer network may advantageously be calculated using any data structure that represents the computer network, such as a graph or a routing tree, without any limitation on the type of graph or routing tree.

In one or more embodiments, the determining the metric value for the node according to the proposed method may comprises: determining, for nodes in a first region around the node in the data structure, values respectively representing intensities of their data traffic towards the node; calculating an average total traffic in a second region around the node in the data structure; calculating an index variable value for the node based on the average total traffic and at least one neighbor index variable value for a node neighbor of the node in the data structure; calculating the metric value for the node based on the index variable value. In some embodiments, the method may further comprise: performing at least two iterations of the calculating the index variable value for calculating at least first and second successive index variable values; and determining the index value based on a difference between the first and second index values. This method may advantageously be performed in a central manner, e.g. by a certain node of the network, for instance the root node of a routing tree of the computer network, or by a distant server or a gateway node connected to the computer network. This method may further advantageously be performed in a distributed manner, that is, by each node of the computer network for which a metric value is to be calculated.

According to an aspect, the present disclosure further proposes a method for determining a (so-called prestige) metric value for a node in a computer network represented by a data structure which may, depending on the embodiments, comprise a routing tree and/or a graph, wherein the proposed method comprises executing iterations of a loop, wherein an iteration comprises: determining at least one data traffic intensity value during a predetermined period at the node; receiving at least one neighbor index variable value for a node neighbor of the node in the data structure; calculating an index variable value for the node based on the at least one data traffic intensity value, and the at least one neighbor index variable value for the node neighbor of the node in the data structure; and calculating the metric value for the node based on the index variable value.

The proposed method may advantageously be performed in a distributed manner, that is, by each node of the computer network for which a metric value is to be calculated. According to another aspect of the present subject disclosure, an apparatus configured to function as a network node in a computer network, comprising a processor and a memory operatively coupled to the processor, wherein the processor is configured for performing the above method for determining a metric value, is also proposed.

In one or more embodiments, hubs may be selected among network nodes based on their determined prestige value. For example, the hubs of the network that should be protected may be selected as the nodes with high prestige values (with respect to a maximum prestige value in the network), in order to minimize the total packet loss in the network in case of a failure at the hub and/or at an interconnect of the hub.

In one or more embodiments, each node i which has determined its prestige value $P_i$ transmits its prestige value to a predefined node (e.g. the root node of a routing tree generated for the network), a gateway or a server connected to the network, which determines a maximum prestige value $M_x$ among the received prestige values.

In other embodiments, a maximum prestige value may be determined in a cooperative manner among the nodes, which is advantageous in embodiments where each node deployed in the network has limited computation power, for example for cost reasons in case of highly dense networks.

For example, in one embodiment, the nodes cooperatively calculate a maximum among the determined prestige values, where each node determines the maximum of the prestige values between the received prestige values from its neigbhouring nodes and its own prestige value. The node transmits to its neighbourhood this maximum value. If the prestige value of the node is equal to the maximum value received from its neighboring nodes, the node is identified as the node with the maximum prestige value in the network.

In another embodiment, the calculation of a maximum of the prestige value (in a cooperative manner among the nodes), comprises the cooperatively calculating through consensus averaging techniques a value

$m_x = \sum_{i=1}^{N} P_i^a$, that is, a sum of the respective prestige values to the power of $\alpha$, where $\alpha$ is a high value (e.g.

equal to 10), and $P_i$ is the prestige value of the node $i$. A maximum of the prestige value may be obtained as $M_x = \sqrt[a]{m_x}$.

Once a maximum prestige value has been determined, possibly in a collaborative manner as described above, each node $i$ may be configured to make a determination as to whether it can join a set of nodes to be protected, for example by verifying if its own prestige level $P_i$ meets one or both (depending on the embodiment) of the following conditions: $|P_i - M_x| \le l(i)$ and $|P_i - M_x| \le l$, where the threshold $l$ is either constant and determined by the Operation and Maintenance function of the network for all the nodes in the network, or a variable threshold $l(i)$ that may be preconfigured for the node or dynamically selected by the node depending, e.g. on the variability in time of the prestige of the node $i$.

In some embodiments, the nodes may also be clustered, that is, grouped into clusters, based on their respective prestige values. For example, node clusters may be formed using $K$-means type algorithm, such as the algorithm described in MacQueen, "Some methods for classification and analysis of multivariate observations," in Proceedings of the fifth Berkely symposium on mathematical statistics and probability, vol. 1, No. 14, pp. 281-297, June 1967. In such case, the clusters may be formed based on a distance of the respective prestige values of the nodes from the average prestige in the cluster. The cluster heads of the clusters may then be selected as nodes to be protected.

In one or more embodiments, a metric different from the above-described prestige metric may be used for the determination of hubs of the networks, that is, nodes of the network that are to be protected, in cases where the data structure corresponding to the computer network includes a routing tree according to which data from the nodes are collected by a root node (also referred to herein as a coordinator node) of the routing tree. Such metric, which may be referred to as "long-term maximum subtree metric", uses the maximum number of hops determined in a subtree that is rooted in the node (for example of node ID $i$) under review for potential selection as a hub.

In some embodiments, the determined maximum number of hops may be normalized, for instance with respect to the path with maximum length in the network, that is, divided by the tree height which is defined as the length of the longest path to the coordinator node:

$$Long - term \ max \ subtree \ metric(i) = \frac{\max(numbers \ of \ hops \ in \ subtree \ rooted \ by \ i)}{Tree \ height}$$

In one or more embodiments, the determination of a long-term maximum subtree metric value may comprise: determining a maximum number of hops in a subtree of the routing tree, wherein the node corresponds to a root of the subtree, determining a tree maximum length among respective lengths of paths to the root node in the routing tree, and calculating the metric value for the node based on the maximum number of hops normalized by the tree maximum length.

In one or more embodiments, the determination of a long-term maximum subtree metric value may comprise: determining a subtree maximum length among respective lengths of paths in a subtree of the routing tree, wherein the node corresponds to a root in the subtree, and calculating the metric value for the node based on the subtree maximum length.

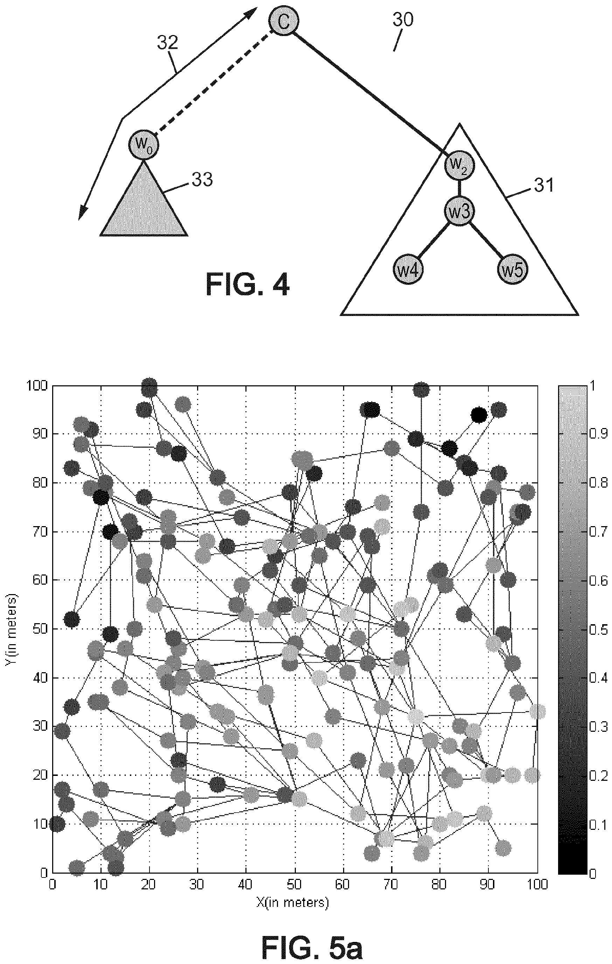

Fig. 4 shows an example of long-term maximum subtree metric for a node with node ID $w_2$ in a computer network (30). On Figure 4, direct neighboring relationships are represented with solid lines between two nodes, and indirect (or path-) neighboring relationships are represented with dashed lines between two nodes.As shown on Fig. 4, node $w_2$ roots a subtree (31), with a single child node with node ID $w_3$, which itself has two child nodes (nodes with ID $w_4$ and $w_5$, respectively). The maximum number of hops in the subtree (31) rooted by node $w_2$ is equal to 2. In the figure, node $w_2$ is connected to a coordinator node (with ID c) through a direct path (single-hop path). On the left of the figure is represented the tree height (32), that is, the longest path to the coordinator node c, which is connected through an indirect path (multiple-hop path represented by the dotted line) to the coordinator node c. Node wo is also connected downward (that is, in a direction opposite to the one leading to the root c) to a subtree (33) having leaf nodes (not represented on the figure). In the example illustrated on fig. 4, the long-term maximum subtree metric for node $w_2$ would be determined as follows:

$$Long-term\ maximum\ subtree\ metric(w2) = \frac{2}{Tree\ height}$$

The long-term maximum subtree metric may be considered essentially a topological and path metric as it considers the topological properties of the routing tree, and not necessarily the data traffic activity of the nodes of the computer network. To this extent the long-term maximum subtree metric is different from the first described prestige metric, which explicitly takes into account the data traffic activity of the nodes since it is determined for a node using the traffic passing by the node.

Various combinations of the above-described prestige metric and long-term maximum subtree metric may also be considered in one or more embodiments, so as to determine for the selection of hubs a metric that uses topological properties of the routing tree while taking into account the data traffic activity of the node for which the metric is determined.

For example, a "short-term maximum subtree" metric (short-term in that it takes into account the data traffic in the routing tree) may be determined for a given node (of node ID i) as the length of the longest active path in a subtree of the routing tree that is rooted in the node i. In this case, in contrast with the long-term maximum subtree metric which is defined using the longest path in a subtree rooted in the node i, the short-term maximum subtree metric uses the longest active path in such subtree. An active path in the subtree may be identified based on data traffic intensities of the nodes included in the path. For example, a path in the subtree may be identified as an active path based upon at least one node of the path having a data traffic intensity above a predetermined threshold. The length of an active path may therefore be calculated in some embodiments by considering data traffic intensities of the nodes included in the path. A data traffic intensity at a network node may be determined using the traffic intensity value for the node i described with regard to the prestige metric. In one or more embodiments, the short-term maximum subtree metric may be normalized, for example with respect to a sum of the traffic intensities in the computer network.

In one or more embodiments, the determination of a short-term maximum subtree metric value may comprise: determining, for nodes in a subtree of the routing tree, traffic intensity values respectively representing intensities of their data traffic towards the node, identifying at least one path in the subtree as an active path, based on the traffic intensity value of at least one node of the at least one path, determining a subtree maximum length among respective lengths of active paths in the subtree, and calculating the metric value for the node based on the subtree maximum length.

Depending on the implementation, each of the prestige metric, long-term maximum subtree metric, and short-term maximum subtree metric may be used, alone or in combination with one or both of the other two metrics, or else with another metric, in order to leverage the differences between those metrics. For instance, a difference between the prestige metric and the short-term maximum subtree metric is that the discount parameter $\alpha$ described above for the prestige metric enables to consider the data traffic in a region around the node (node i) under review, which region may be determined using the discount parameter $\alpha$, while the short term metric does not consider a discounting of the traffic but considers the traffic incident to the node under review (node *i*), i.e. does not limit the traffic to the traffic that is coming from a region around the node *i*.

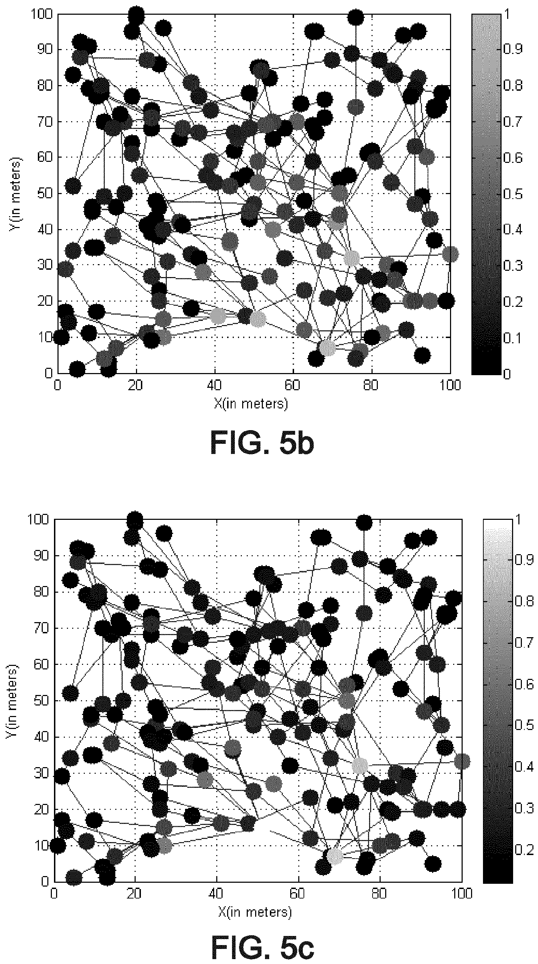

Figures 5(a), (b), and (c) respectively show plots of the prestige-based ranking (Fig. 5(c)), the long-term maximum subtree metric ranking (Fig. 5(a)), and the short-term maximum subtree ranking (Fig. 5(b)). The deployment considered in the evaluation illustrated on Figures 5(a), (b), and (c) is a test scenario of 180 nodes, deployed in a 100x100 meters coverage region.

In comparing the long-term maximum subtree metric (corresponding to Fig. 5(a)) with the short-term (traffic based) maximum subtree metric (corresponding to Fig. 5(b)), one can see that using the long-term maximum subtree metric results in an important number of nodes (relative to the total number of nodes) with a high/medium ranking, while using the short-term maximum subtree metric results in having an important number of low ranking/inactive nodes (relative to the total number of nodes).

In comparing the performances of the short-term maximum subtree metric of the Fig. 5(b), with the performances of a prestige-based ranking calculated for a discount parameter $\alpha$ = 0.3 and for a random Poisson traffic with intensities taken from the interval [0, 20 packets], i.e. at minimum the node is inactive (transmitting 0 packet per second) and at maximum it is transmitting 20 packets per second, one can see that there is more variability in the ranking values for the long-term maximum subtree ranking (corresponding to Fig. 5(a)) when compared to the short-term maximum subtree ranking (corresponding to Fig. 5(b)), and prestige-based ranking (corresponding to Fig. 5(c)).

The discount factor $\alpha$ can be translated into a maximum number of hops $h$ around the node $i$ as follows: If the node $k$ is transmitting at the maximum traffic intensity, i.e. 20kbps, its traffic is taken into account in the prestige calculation if $20\alpha^h$ = 1. The value of the number of hops in the scenario may be calculated as $h$ = 2.48 ≈ 3 hops for a discount factor $\alpha$ = 0.3.

As to a comparison between the short-term and prestige-based ranking schemes, the prestige-based ranking shows low variability, i.e. a low number of nodes with high/moderate prestige values as compared to the short-term maximum subtree metric.

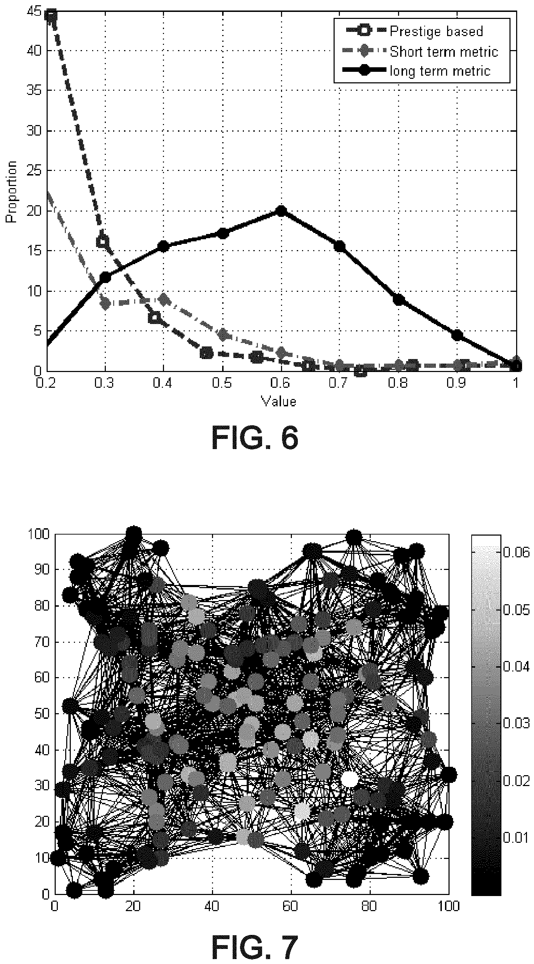

Figure 6, which shows a histogram of values of the prestige metric, the short-term maximum subtree metric, and long-term maximum subtree metric, reflects those results. Indeed, one can see on Figure 6 that highest metric variability is obtained for the (topological) long-term maximum subtree metric (plain curve with circle markers on Fig. 6). One can then anticipate that using the long-term maximum subtree metric may increase the latency for the determination of the hubs of the network since these nodes are then mostly based on the maximum ranking. Using the long-term maximum subtree metric may also increase the complexity of the protection of these nodes.

When comparing on Figure 6 the short-term maximum subtree ranking performance with the prestige-based ranking performance, one can see that the number of the nodes of intermediate ranking for the short-term maximum subtree (in dash-dotted line with diamond markers) is higher than the number of nodes with intermediate ranking for the prestige-based ranking (in dotted line with square markers). One can then anticipate that using the prestige metric may advantageously improve the flexibility of the system by reducing the complexity of finding hubs of the network since a lower number of nodes with high ranking is available for the prestige-based ranking as compared with the two other metrics (long-term and short-term maximum subtree metrics).

Another advantage of the proposed metrics is the possibility to implement them as consensus averaging techniques over neighbors in a network routing tree in embodiments where a data structure comprising a routing tree is used.

In one or more embodiments, the prestige of a node i may be calculated using a routing tree as follows: the nodes in a region around the node $i$ are exchanging the traffic intensities of their transmission to the node $i(A_{j,i})$. Then, the nodes may cooperatively calculate the average total received traffic in a region controlled by the above-described discount parameter $\alpha$ through consensus averaging. This leads to obtaining a prestige value $P_i$ for the node $i$, as described above. The hubs of the network may then be identified cooperatively as the nodes with the maximum prestige as described above for embodiments of the present subject disclosure.

These tree-based hub selection schemes may be considered efficient for a relatively low number of failures in the network, which translates into a relatively low number of failing nodes/edges in the routing tree. When the number of failures in the routing tree increases, it may be preferable to use a network graph instead of a routing tree for the identification of hubs in the network. Indeed, in cases where the number of failures in the network is significant, as such failures still translate into failing nodes/edges in the routing tree, a higher number of failing nodes/edges in the routing tree may lead to a disconnected routing tree and require a reconfiguration of the routing tree. It may then be considered more efficient, in particular to avoid routing tree reconfigurations, to consider determining prestige values using a network graph instead.

In this regard, the above-described prestige value determination schemes can advantageously be performed using either a routing tree or a network graph.

Figure 7 illustrates a typical prestige distribution in the network for a random deployment of 180 nodes, as for Figures 5(a), (b), and (c), and shows prestige metric values calculated from the graph for a random deployment of 180 nodes in 100x100 meters (light shades correspond on the Figure to high prestige levels, and dark shades correspond to low prestige levels).

Performing prestige calculations using a network graph instead of a routing tree advantageously improves resistance to failures in the network. In fact, a high number of edge failures in a massive Internet of Things (IoT) network deployment will not impact the prestige calculations in the graph while it can highly modify the prestige when using a routing tree. A difference between the tree-based and graph-based prestige is the definition of the neighboring nodes $N(i)$ for the prestige calculation: $N(i)$ is the set of the neighbors of the node $i$ in the routing tree for the tree-based prestige calculations, while $N(i)$ is the set of the neighbors of the node $i$ in the graph of the network for the graph-based prestige calculations.

In one or more embodiments, the prestige may be periodically determined, using either a network graph or a routing tree, by the propagation of the number of transmitted packets between the nodes in the routing tree or in the graph. A change in the prestige of the node $i$ may indicate a connection failure in the neighbourhood of the node $i$, a traffic variation for an important number of nodes in the neighbourhood, or both. For wireless sensor networks it may be assumed that the packets are small, and that the periodicity of the measurement reporting of the nodes is known. One way to discriminate between a node failure and traffic variability is to monitor the prestige with the periodicity of the measurement reporting. In some embodiments, each time a node $i$ transmits to the neighbouring node $j$ its readings, the local prestige variable $x^{(k)}(i)$ is updated with the prestige relation described above.

In some embodiments, a node failure event of the node i may be detected if a reduction in the prestige $x^{(k)}(i)$ for the node $i$ is obtained for an important number of measurement periods, e.g. for a number of measurement periods that increases beyond a predetermined threshold (for example, if a steady reduction of the prestige is measured for at least 20 successive periods of prestige calculation, i.e. around 20 seconds). Therefore the prestige calculation also advantageously provides a convenient way to identify node failures through a steady reduction of the prestige for a high number of measurement periods. Another way to identify a failure is to consider the amplitude of the prestige reduction, assuming that the traffic is constant in the network. For example if the prestige of the node $i$ is suddenly reduced by a value superior to a predetermined threshold, such reduction may be interpreted as indicating a node failure, which event will be referred to here-below as a "detected failure".

In one or more embodiments, the number of detected failures may be monitored in the network, and if the number of detected failures is determined to be low (e.g. the number of detected failures is below a predetermined threshold), the prestige of nodes may be monitored using the routing tree. If the number of detected failures is determined to be high (e.g. the number of detected failures increases beyond the predetermined threshold), calculation and monitoring of the prestige will be based on the graph.

Whether calculated using the routing tree or the network graph, nodes with a high prestige value, or a prestige value close to the maximum of the prestige level among the network nodes may be identified as the nodes to be protected by cycles in the network.

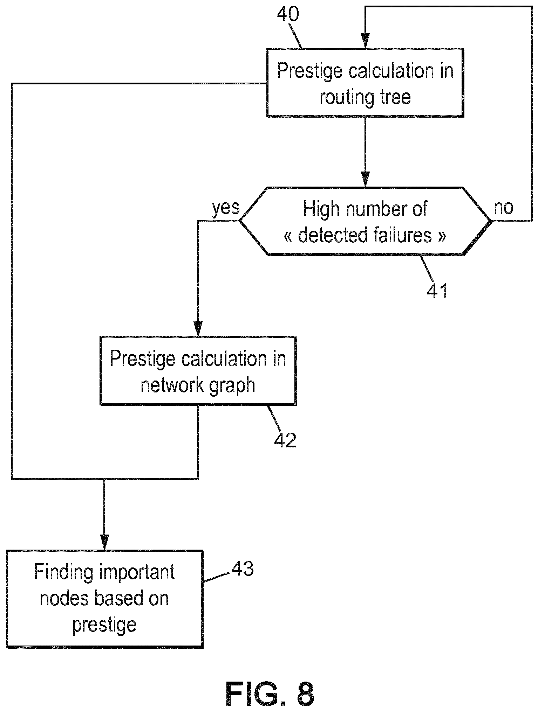

Figure 8 illustrates an exemplary embodiment of the above-described general prestige management procedure in a computer network.

Calculations of prestige metric values are first performed (40) using a routing tree, further to which a number of detected failures in the network is monitored (41). If the determined number of detected failures increases beyond a predetermined threshold, so that it is considered to be at a high level, the evolution of prestige values are monitored with calculation (42) using a network graph instead of the routing tree. If the determined number of detected failures stays below the predetermined threshold, so that it is considered not to be at a high level, the evolution of prestige values keeps being monitored with calculation (40) using the routing tree.

Upon calculation of prestige metric values, whether using the routing tree or the network graph, nodes to be protected are selected (43) among nodes of the network, based on the calculated prestige metric values, according to one of the embodiments of the present subject disclosure.

The present subject disclosure further provides a scheme for determining cycles around nodes to be protected, that is, for defining local repair candidates around a selected hub.

Finding a cycle around a specific node in a graph is a graph theory problem that is generally solved by means of the above-mentioned depth first search (DFS) around the specific node technique. The complexity of the DFS technique for a graph of $N$ nodes and $E$ edges is at worst $O(N+E)$ for finding a cycle around a specific node in the network. This complexity is essentially due to the traversal of the graph, i.e. the exploration and the marking of the neighbors of the node until a cycle is found. In the worst case, the number of the nodes $N$ is explored and the different edges of the graph are marked.

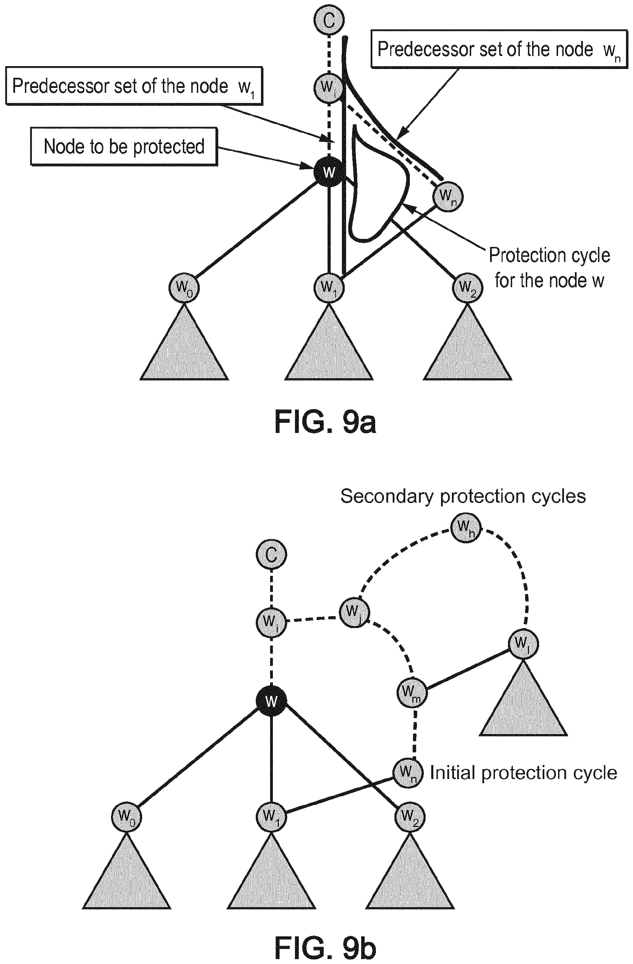

Figures 9(a) and (b) illustrate a proposed scheme for cycle determination around a given node according to one or more embodiments in which a data structure representing the computer network comprises a routing tree according to which data are transmitted from the nodes to a root node of the computer network, such as, for example, an RPL routing. On Figures 9(a) and 9(b), direct neighboring relationships are represented with solid lines between two nodes, and indirect (or path-) neighboring relationships are represented with dashed lines between two nodes.

The proposed cycle determination scheme may advantageously be applied to a hub, that is, a node to be protected against node and/or edge failure, as selected according to one or more embodiments of the present subject disclosure. In such case, the determined cycle may serve as a protection path surrounding the node to be protected, that is, as a local repair cycle, usable upon occurrence of a failure of the node to be protected and/or an edge thereof.

Referring Fig. 9(a) and (b), an ancestor (node $w_1$ on Fig. 9(a)) of the node to be protected (node $w$ on Fig. 9(b)) is chosen, and a neighbor node (node $w_n$ on Fig. 9(a)) of the node to be protected is thereafter identified, under the constraint that an intersection between a predecessor set of the neighbor node $w_n$, $P_c(w_n)$, and a predecessor set of the ancestor node $w_1$ be maximized. The predecessor set $P_c(w)$ of a network node w may be defined as the sequence of nodes from the network node w towards the root node of the routing tree. For example, as the node $w_1$ is an ancestor in the routing tree of the node to be protected, the node to be protected belongs to the predecessor set $P_c(w_1)$ of its ancestor node $w_1$.

In one or more embodiments, the neighbor node $w_n$ may be identified by identifying $N$ neighbor nodes ($N \geq 2$)

forming a set *WN* of neighbor nodes of the node to be protected *w* (*WN(w)* = {$w_{n1}$, $w_{n2}$, ..., $w_{nN}$}), determining respective predecessor sets for the neighbor nodes of the set WN ($P_c$\_*WN(w)* = {$P_c(w_{n1})$, $P_c(w_{n2})$, ..., $P_c(w_{nN})$}), and testing for each determined predecessor set the intersection with the predecessor set of the ancestor node $w_1$, $P_c(w_{nk}) \cap P_c(w_1)$, so as to select the neighbor node for which the intersection is maximized:

$$w_n = \{ \mathrm{w}_i \mid P_c(w_i) \bigcap P_c(w_1) = \max_{k=1,...,N}(P_c(w_{nk}) \bigcap P_c(w_1)) \}.$$

In one or more embodiments, the search of the neighbor node $w_n$ may be performed under a constraint that the intersection between a predecessor set of the ancestor node and a predecessor set of the neighbor node be maximized.

Referring to Fig. 9(a), the ancestor of the node w is the node $w_1$ that is on the downstream from the node *w.*

In one or more embodiments, the proposed scheme may be implemented using neighbors selected from the graph representing the computer network, as opposed to selected from a tree, e.g. a routing tree, representing the computer network.

In one or more embodiments, a protection cycle for the node of interest may be obtained from the triplet ($w_1$, $w_n$, $w_i$), where $w_i$ is the last node in the intersection set between the predecessor sets $P_c(w)$ and $P_c(w_n)$. The last node may be defined as a first node of an intersection path oriented towards the root node, the intersection path corresponding to the intersection between the predecessor set of the ancestor node $w_1$ and the predecessor set of the neighbor node $w_n$.

An advantage of the proposed fast cycle search lies in the ability to use the output of calculations carried out as part of performing the so-called breath first graph traversal (BFS) technique for finding breadth first search trees, in order to find cycles around the node *w.* Among these calculation outputs are the predecessor sets that may be used for the calculation of the centrality of the nodes and for finding the routing tree of the RPL routing.

The proposed technique will advantageously find the cycles that reroute the packets intended to the node to be protected w with very low latency to the *upstream* nodes in the predecessor set of the node w in order to improve the restoration latency if the node *w* fails or any edges leading to the node *w* fail. Another advantage is that the technique is less complex with respect to the state of the art DFS technique.

The use of a single-cycle-based protection scheme as described above may be subject to a sensitivity to edge failures, for example, referring to Fig. 9(a), in cases where an edge failure occurs between the nodes $w_n$ and $w_i$, which would break the protection cycle ($w_1$, $w_n$, $w_i$). As a consequence it may be desirable to improve the resilience of the protection cycle ($w_1$, $w_n$, $w_i$) as backup candidate for a node w failure.

To address this need, the present subject disclosure proposes embodiments in which the single protection scheme is improved by building nested protection cycles around the node w as shown in Fig. 9(b).

In these embodiments, an initial protection cycle surrounding a node to be protected w may be determined according to the above-described single cycle protection scheme. The initial protection cycle may then be augmented by a secondary protection cycle, that may in embodiments be built using a scheme similar to the one used for building the initial protection cycle, in order to create nested protection cycles (also referred to herein as "redundant trees").

In one or more embodiments, the cycle augmentation may be reiterated in order to augment the nested cycles, and therefore further increase the resiliency of the network to node/edge failures.

Referring to Figs. 9(a) and 9(b), the initial protection cycle may define in some embodiments a backup path with regard to a routing tree (e.g., a RPL routing tree) that short-cuts a network hub w towards the concentrator. A secondary protection cycle may be used to protect against the failures of nodes/edges of the initial protection cycle. The number of protection cycles that were set around the hubs of the network may be defined as the "degree" d of the nested protection cycles. The protection cycle of degree d may be formed using the initial protection cycle and *d* - 1 secondary protection cycles.

For a massive and dense IoT deployment scenarios, nested protection cycles can advantageously offer more backup paths around the hubs of the network as determined using the above-described schemes for selecting hubs, that is, nodes to be protected, in a computer network.

In one or more embodiments, the nested cycles may be determined from the graph structure of the network.

Figure 9(b) shows an example nested protection cycle of degree 2 built from the initial protection cycle built around the node to be protected w. For example, if an edge on the path (*w*, $w_i$) fails, the sequence of edges (*w*, $w_1$) ($w_1$, $w_n$) ($w_n$, $w_j$) ($w_j$, $w_i$) is used to reroute the packets of the node w to the node $w_i$. If any node/edge in the path ($w_m$, $w_i$) of the primary protection cycle fails, the secondary protection cycle will provide a backup path for the protection cycle through the path ($w_m$, $w_l$) ($w_l$, $w_h$) ($w_h$, $w_j$) that provides rerouting towards the root node.

The maximum number of edge failures the scheme can be resistant to is related to the degree of the redundant trees, i.e. for redundant trees of degree *d* the maximum number of edge failures that the redundant tree can resist to is *d.*

Referring to Fig. 9(b), the nested protection cycles may be built in one or more embodiments as follows:
An initial protection cycle may be built as follows, which corresponds to the above-described scheme for building initial protection cycles: determining a pair of neighbouring nodes $(w_1, w_n)$ with respect to the node to be protected $w$, such that the node $w \in P_c(w_1)$ and the intersection between a predecessor set of $w_1$ and a predecessor set of $w_n$ is maximised. The initial protection cycle may then be determined as $(w_1, w_n, w_i)$ where $w_i$ is the last node in the path given by the intersection between the respective predecessor sets of $w_1$ and $w_n$.

The first cycle may then be augmented as follows: determine a pair of nodes $(w_m, w_l)$ such that $w_l$ is a neighbour of $w_m$ and $w_m$ is a node in the path of the initial protection cycle, i.e. the path between $w_n$ and $w_i$. The augmented protection cycle may then be determined as $(w_m, w_l, w_j)$ where $w_j$ is the last node in the path given by the intersection between the predecessor sets of nodes $w_l$ and $w_m$.

In embodiments, this cycle augmentation process may be reiterated, so as to obtain redundant trees of degree $d + 1$ with $d$ iterations of performing the cycle augmentation.

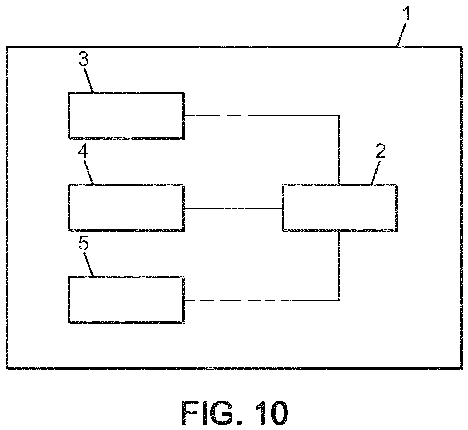

Fig. 10 illustrates an exemplary network node 1 configured to use a network management feature in accordance with embodiments of the present subject disclosure.

The network node 1 includes a control engine 2, a network management engine 3, a data communication engine 4, a memory 5, and a power supply (e.g., a battery, plug-in power supply, etc.) (not represented on the figure).

In the architecture illustrated on Fig. 10, all of the network management engine 3, data communication engine 4, and memory 5 are operatively coupled with one another through the control engine 2.

In one embodiment, the network management engine 3 is configured to perform various aspects of embodiments of the proposed method for network management, such as determining metric values for the node 1, and joining a set of nodes to be protected, based on the determined metric values.

In one embodiment, the data communication engine 4 is configured to receive and transmit data packets, and process received packets.

In embodiments of the present subject disclosure, the data communication engine 4 and the network management engine 3 operate in a coordinated manner for purposes of determining data traffic intensity at the node 1 or in the neighborhood thereof.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, cause the processor to perform the elements described herein. In addition, the memory 5 may be any type of data storage computer storage medium, capable of storing a data structure representing a computer network to which the network node 1 belongs, coupled to the control engine 2 and operable with the data communication engine 4 and the network management engine 3 to facilitate management and processing of data packets stored in association therewith.

It will be appreciated that the network node 1 shown and described with reference to Fig. 10 is provided by way of example only. Numerous other architectures, operating environments, and configurations are possible. Other embodiments of the node may include fewer or greater number of components, and may incorporate some or all of the functionality described with respect to the network node components shown in Fig. 10. Accordingly, although the control engine 2, network management engine 3, data communication engine 4, and memory 5 are illustrated as part of the network node 1, no restrictions are placed on the location and control of components 2 - 5. In particular, in other embodiments, components 2 - 5 may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and subcombinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1.  A method for managing a computer network, comprising:

    - obtaining a metric value for each node of a plurality of nodes of the computer network using a data structure for the node, based on a data traffic intensity value for the node, wherein the data structure represents nodes of the computer network and edges respectively corresponding to neighboring relations between two nodes of the computer network; and
    - selecting, among the nodes of the computer network, at least one node to be protected against node and/or edge failure based on the determined metric values.

2.  The method of claim 1, wherein the metric value is determined based on a network topology of the computer network around the node and the data traffic intensity value for the node.

3.  The method according to any of claims 1 to 2, wherein the data structure comprises a routing tree according to which data are transmitted from the nodes to a root node of the computer network, the method further comprising: determining in the network an initial protection path surrounding the at least one node to be protected, the determining the initial protection path comprising:

    - identify in the data structure a first node neighbor of the at least one node to be protected such that the at least one node to be protected belongs to a predecessor set of the first node neighbor, wherein a predecessor set of a given node comprises all nodes located between the given node and the root node in the routing tree;
    - identify in the data structure a second node neighbor of the at least one node to be protected such that an intersection between the predecessor set of the first node neighbor and a predecessor set of the second node neighbor is maximized;
    - determining the initial protection path based on an initial protection path node triplet comprising the first node neighbor, the second node neighbor, and a first last node, wherein the first last node is a first node of an initial protection intersection path oriented towards the root node, the initial protection intersection path corresponding to the intersection between the predecessor set of the first node neighbor and the predecessor set of the second node neighbor.

4.  The method of claim 3, further comprising: determining in the network a secondary protection path surrounding the at least one node to be protected, based on the initial protection path, wherein the determining the secondary protection path comprises:

    - determining at least one initial protection path node that belongs to the initial protection path;
    - identify in the data structure a third node neighbor of the at least one initial protection path node;
    - determining the secondary protection path based on a secondary protection path node triplet comprising the at least one initial protection path node, the third node neighbor, and a second last node, wherein the second last node is a first node of a secondary protection intersection path oriented towards the root node, the secondary protection intersection path corresponding to the intersection between the predecessor set of the third node neighbor and the predecessor set of the at least one initial protection path node neighbor.

5.  The method according to any of claims 1 to 4, wherein the obtaining the metric value for the node further comprises executing iterations of a loop, wherein an iteration comprises:

    - determining at least one data traffic intensity value during a predetermined period at the node;
    - receiving at least one neighbor index variable value for a node neighbor of the node in the data structure;
    - calculating an index variable value for the node based on the at least one data traffic intensity value, and the at least one neighbor index variable value for the node neighbor of the node in the data structure;
    - calculating the metric value for the node based on the index variable value.

6.  The method of claim 5, wherein the determining at least one data traffic intensity value during a predetermined period at the node comprises: determining respective data traffic intensity values based on a number of data packets received from at least one of the neighbor nodes of the node.

7. The method according to any of claims 5 to 6, wherein the metric value for the node is calculated based on a difference between the first and second index variable values.

8. The method according to any of claims 5 to 7, wherein the data structure comprises a routing tree and a network graph, the method further comprising: determining whether to use the routing tree or the network graph for the determination of the metric value for the node based upon a comparison of a number of failing nodes and/or edges in the routing tree with a first predefined threshold.

9. The method according to any of claims 1 to 8, wherein the selecting the at least one node to be protected against node and/or edge failure further comprises:

   - determining a maximum prestige value in the computer network, based on the determined metric values;
   - selecting the at least one node based on a comparison of a distance between its determined metric value and the maximum prestige value, with a second predefined threshold.

10. The method of any of claims 1 to 4, wherein the data structure comprises a routing tree according to which data from the nodes are collected by a root node, and wherein determining the metric value for the node comprises:

   - determining, for nodes in a subtree of the routing tree, traffic intensity values respectively representing intensities of their data traffic towards the node;
   - identifying at least one path in the subtree as an active path, based on the traffic intensity value of at least one node of the at least one path;
   - determining a subtree maximum length among respective lengths of active paths in the subtree; and
   - calculating the metric value for the node based on the subtree maximum length.

11. The method according to any of the preceding claims, wherein the data structure comprises a RPL routing data structure, the routing tree is a RPL routing tree, and the network graph is a destination oriented directed and acyclic graph (DODAG).

12. An apparatus, the apparatus comprising a processor, a memory operatively coupled to the processor, and network interfaces to communicate in a computer network, wherein the apparatus is configured to perform a method according to any of claims 1 to 11.

13. A non-transitory computer-readable medium encoded with executable instructions which, when executed, causes an apparatus comprising a processor operatively coupled with a memory, to perform a method according to any of claims 1 to 11.

14. A computer program product comprising computer program code tangibly embodied in a computer readable medium, said computer program code comprising instructions to, when provided to a computer system and executed, cause said computer to perform a method according to any of claims 1 to 11.

15. A data set representing, for example through compression or encoding, a computer program according to claim 14.

FIG. 1a

FIG. 1b

Generating a data structure — 10

Determining metric values
for a plurality of nodes — 11

Selecting nodes to be
protected based on metric values — 12

# FIG. 2

FIG. 3

FIG. 4

FIG. 5a

FIG. 5b

FIG. 5c

**FIG. 6**

**FIG. 7**

FIG. 8

Predecessor set of the node $w_n$

Predecessor set of the node $w_1$

Node to be protected

Protection cycle for the node w

**FIG. 9a**

Secondary protection cycles

Initial protection cycle

**FIG. 9b**

FIG. 10

Europäisches
Patentamt

European
Patent Office

Office européen
des brevets

## EUROPEAN SEARCH REPORT

**Application Number**

EP 18 30 5362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NESRINE KHELIFI ET AL: "Rescue-Sink: Dynamic sink augmentation for RPL in the Internet of Things : Rescue-Sink: dynamic sink augmentation for RPL in the Internet of Things", TRANSACTIONS ON EMERGING TELECOMMUNICATIONS TECHNOLOGIES, vol. 29, no. 2, 1 February 2018 (2018-02-01), page e3278, XP055509576, ISSN: 2161-3915, DOI: 10.1002/ett.3278 | 1,2,4-15 | INV. H04L12/707 H04L12/703 ADD. H04W84/18 H04L12/753 H04L12/801 |
| Y | * page 6; figure 2 * * section 4.4.1; page 8 * | 3 | |
| Y | EP 3 244 574 A1 (CISCO TECH INC [US]) 15 November 2017 (2017-11-15) * paragraph [0036] - paragraph [0040]; claim 1; figures 15,16 * | 3 | |

TECHNICAL FIELDS SEARCHED (IPC)

H04L
H04W

The present search report has been drawn up for all claims

| Place of search | Date of completion of the search | Examiner |
|---|---|---|
| The Hague | 26 September 2018 | Tsuchiya, Kuni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 30 5362

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2018

| Patent document cited in search report | | Publication date | Patent family member(s) | | Publication date |
|---|---|---|---|---|---|
| EP 3244574 | A1 | 15-11-2017 | CN | 102971988 A | 13-03-2013 |
| | | | EP | 2548341 A1 | 23-01-2013 |
| | | | EP | 3244574 A1 | 15-11-2017 |
| | | | US | 2011228788 A1 | 22-09-2011 |
| | | | US | 2013128773 A1 | 23-05-2013 |
| | | | WO | 2011115668 A1 | 22-09-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *RPL: IPv6 Routing Protocol for Low-Power and Lossy Networks,* March 2012
- **BOUKERCHE ; TROPPER.** A distributed graph algorithm for the detection of local cycles and knots. *IEEE Transactions on Parallel and Distributed Systems,* 1998, vol. 9 (8), 748-757

- The trickle algorithm. IETF, March 2011
- **MACQUEEN.** Some methods for classification and analysis of multivariate observations. *Proceedings of the fifth Berkely symposium on mathematical statistics and probability,* June 1967, vol. 1 (14), 281-297